## Europäisches Patentamt
## European Patent Office
## Office européen des brevets

(19)

(11) Veröffentlichungsnummer: **0 177 024**
**B1**

(12)

# EUROPÄISCHE PATENTSCHRIFT

(45) Veröffentlichungstag der Patentschrift:
**18.01.89**

(51) Int. Cl.⁴: **A 01 C 5/06, A 01 C 7/20**

(21) Anmeldenummer: **85112430.5**

(22) Anmeldetag: **01.10.85**

(54) **Verfahren und Vorrichtung zur Bestimmung der Arbeitstiefe von Säscharen von Drillmaschinen.**

(30) Priorität: **05.10.84 DE 3436601**

(43) Veröffentlichungstag der Anmeldung:
**09.04.86 Patentblatt 86/15**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**DE-A- 1 457 742**
**DE-C- 3 237 538**
**US-A- 4 414 792**

(73) Patentinhaber: **Amazonen-Werke H. Dreyer GmbH & Co. KG, Postfach 51, D-4507 Hasbergen-Gaste (DE)**

(72) Erfinder: **Grosse-Scharmann, Franz, Dr., Waldstrasse 35, D-2872 Hude I.O. (DE)**
Erfinder: **Gattermann, Bernd, Eichenweg 3, D-2872 Hude I.O. (DE)**
Erfinder: **Gehrke, Rudolf, Lärchenweg 6, D-2990 Papenburg 2 (DE)**

(74) Vertreter: **Patentanwälte Grünecker, Kinkeldey, Stockmair & Partner, Maximilianstrasse 58, D-8000 München 22 (DE)**

ACTORUM AG

**Beschreibung**

Die Erfindung betrifft ein Verfahren zur Bestimmung der Arbeitstiefe von Säscharen von Drillmaschinen, bei dem eine Abtasteinrichtung die Bodenoberfläche abtastet und entsprechend Signale erzeugt, die in einer Auswerteschaltung ausgewertet und zur Ermittlung der Arbeitstiefe herangezogen werden. Die Erfindung betrifft auch eine Vorrichtung zur Durchführung eines solchen Verfahrens.

Ein derartiges Verfahren bzw. eine solche Vorrichtung ist aus der DE-A-32 37 538 bereits bekannt. Dort tastet ein an einem Schwingarm gelagertes Abfühlrad die Bodenoberfläche ab. Bei dieser Abtastung erzeugt der Schwingarm entsprechend den Auf- und Abbewegungen Signale, die in einer Auswerteschaltung ausgewertet werden. Die von der Abtasteinrichtung hierdurch erhaltenen Signale werden so ausgesiebt, dass jeweils nur die unteren Scheitelpunkte der Schwingbewegung des Abfühlorganes berücksichtigt werden. Mit dieser Massnahme soll erreicht werden, dass möglichst genau die Oberfläche des festen Bodens zur Basis der Arbeitstiefe gemacht wird. Loses, auf der festen Bodenoberfläche sich befindendes Material, wie Steine oder Kluten, soll dabei unberücksichtigt bleiben.

Insbesondere bei Böden, bei denen sich auf der Bodenoberfläche vor dem Einsäen noch viele Kluten befinden, führt dieses bekannte Verfahren zu fehlerhaften Ergebnissen, weil diese Kluten nicht berücksichtigt werden, obwohl sie nach dem Sävorgang, insbesondere wenn danach noch gewalzt bzw. mit dem Saatstriegel der Boden bearbeitet wird und die Kluten durch die Einwirkung der Witterung zerfallen, einen nicht zu vernachlässigenden Teil der die Samenkörner bedeckenden Bodenschicht bilden.

Der Erfindung liegt daher die Aufgabe zugrunde, ein Verfahren und eine Vorrichtung der eingangs genannten Art derart weiterzubilden, dass die Ablagetiefe von Saatkörnern auch auf Böden mit sehr vielen auf der Bodenoberfläche liegenden Kluten genau bestimmt werden kann, so dass ein sicherer Aufgang und ein optimales Wachstum der im Boden abgelegten Saatkörner möglich ist.

Zur Lösung dieser Aufgabe wird bei einem Verfahren der eingangs genannten Art vorgesehen, dass aus den Signalen ein die auf der Bodenoberfläche liegenden Kluten berücksichtigender, für das Bodenprofil charakteristischer Wert ermittelt wird, der einem Wert entspricht, den man bei der Abtastung einer ideal eingeebneten Bodenoberfläche erhalten würde und dass in Abhängigkeit dieses charakteristischen Wertes die Arbeitstiefe bestimmt wird.

Das erfindungsgemässe Verfahren erfasst gemäss diesen Merkmalen das Bodenprofil und berücksichtigt auch solche Signalwerte, die auf die auf der Bodenoberfläche liegenden Kluten zurückzuführen sind. Unter Berücksichtigung aller dieser Signalwerte kann ein Mittelwert gebildet werden, der etwa dem Wert entspricht, wie man ihn erhalten würde, wenn die Bodenoberfläche ideal eingeebnet wäre. Da dieser Wert der tatsächlich über dem Saatgut liegenden Bodenschicht entspricht, wird die Arbeitstiefenbestimmung ausgehend von diesem charakteristischen Wert genauer, so dass als Folge davon letztlich der gute Aufgang und das optimale Wachstum der Saatkörner zuverlässig sichergestellt werden kann.

In vorteilhafter Weiterbildung des Verfahrens ist vorgesehen, dass der charakteristische Wert unter Zugrundelegung der in einem bestimmten Zeitintervall erfassten Signale der Abtasteinrichtung ermittelt wird. Im allgemeinen wird es ausreichend sein, die entsprechenden Signale nicht fortlaufend auszuwerten, sondern hierfür Zeitintervalle während des Sävorgangs vorzusehen, da die Klutenbildung bei der zuvor erfolgten Bearbeitung der Bodenoberfläche z.B. mit einer Egge im allgemeinen über die Ackerfläche verteilt ähnlich sein wird. Es reicht daher aus, von Zeit zu Zeit in bestimmten Intervallen den erfassten charakteristischen Wert zu überprüfen bzw. durch einen neuen etwas veränderten zu ersetzen.

Ebenso ist es natürlich auch möglich, den charakteristischen Wert unter Zugrundelegung der in einem bestimmten Wegintervall erfassten Signale der Abtasteinrichtung zu ermitteln.

Bei einer vorteilhaften Durchführung des Verfahrens ist vorgesehen, den charakteristischen Wert durch Aufsummierung und anschliessender Mittelwertbildung der in den Intervallen erfassten Signale zu ermitteln.

Durch diese Massnahme werden sämtliche in einem bestimmten Intervall erfassten Signale zur Auswertung mit herangezogen, so dass es möglich ist, durch anschliessende Mittelwertbildung einen sehr genauen, einer eigeebneten Bodenfläche entsprechenden charakteristischen Wert zu erhalten.

Eine weitere Ausgestaltung des erfindungsgemässen Verfahrens sieht vor, dass die Abtasteinrichtung die Grösse der Kluten als Mass für die Rauhigkeit des Bodens erfasst. Gemäss dieser Weiterbildung kann durch Integration zwischen zwei Minimalwerten der mit der Abtasteinrichtung erfassten Signale die Grösse der einzelnen Kluten erfasst werden. Die so erhaltenen Werte stellen ein Mass für die Rauhigkeit des Bodens dar. Ausgehend von diesem Wert kann dann wieder ein einer ideal eingeebneten Bodenfläche entsprechender Wert ermittelt werden, in dessen Abhängigkeit sich dann wiederum die Arbeitstiefe der Säscharen bestimmen lässt.

Als eine Weiterbildung der Erfindung ist vorgesehen, dass auf der Basis des der ideal ebenen Bodenoberfläche entsprechenden charakteristischen Wertes die Ablagetiefe der Saatkörner automatisch gesteuert oder geregelt wird. Dabei wird der Vorteil erhalten, dass die den Schlepper beim Sävorgang steuernde Person entlastet wird, weil die richtige Ablagetiefe von selbst eingestellt wird.

Eine weitere Ausgestaltung der Erfindung sieht vor, dass die Ablagetiefe der Saatkörner bei einem stark schwankenden Wert der Klutengrösse bzw.

grosser Rauhigkeit grösser als die Ablagetiefe der Saatkörner bei einem schwach schwankenden Wert der Klutengrösse bzw. kleine Rauhigkeit ausgehend von dem charakteristischen Wert gewählt wird. Durch diese Massnahme wird dem Umstand Rechnung getragen, dass das Erfassen von stark schwankenden Werten der Klutengrösse bzw. das Erfassen einer grossen Rauhigkeit ein Hinweis darauf ist, dass es insbesondere viele stark ausgebildete Täler in der Bodenstruktur gibt, so dass der Abstand zwischen dem ermittelten charakteristischen Wert und dem Wert, der in einem Tal erhalten werden würde, relativ gross ist. Da jedoch das Saatgut in jedem Fall auch noch unter den gemessenen Tälern der Bodenoberfläche liegen soll, wird ausgehend von dem die eingeebnete Bodenfläche repräsentierenden charakteristischen Wert eine grössere Ablagetiefe der Saatkörner bezüglich dieses Wertes gesteuert bzw. geregelt. Bei kleiner Rauhigkeit sind die Abstände zwischen dem charakteristischen Wert und den Talwerten wesentlich geringer, so dass ausgehend von dem charakteristischen Wert auch nur eine kleinere Ablagetiefe eingestellt wird.

Bei einem Abtastsystem zur Durchführung des Verfahrens mit einer Abtasteinrichtung für das Bodenprofil, die dem Bodenprofil entsprechende Signale erzeugt und mit einer Auswerteschaltung, die unter Verwendung der Signale der Abtasteinrichtung ein zur Bestimmung der Arbeitstiefe der Säschare einer Drillmaschine geeignetes Ausgangssignal erzeugt ist erfindungsgemäss vorgesehen, dass die Abtasteinrichtung aus einem Ultraschallsender und -empfänger besteht und dass als Auswerteschaltung ein Mikroprozessor vorgesehen ist, wobei die vom Sender ausgesandten Ultraschallwellen in Richtung der Bodenoberfläche gerichtet sind und wobei die vom Empfänger aufgenommenen, von der Bodenoberfläche reflektierten Ultraschallwellen in elektrische Signale umgewandelt und im Mikroprozessor ausgewertet werden. Die Intensität der von der Bodenoberfläche reflektierten Ultraschallwellen ist zu den Schwankungen im Bodenoberflächenprofil, d.h. also zur Rauhigkeit der Bodenoberfläche proportional. Die somit erhaltenen reflektierten Ultraschallsignale können dann in einem Mikroprozessor entsprechend dem vorstehend beschriebenen Verfahren ausgewertet werden, so dass sich aufgrund dieser Signale dann ein charakteristischer Wert ermitteln lässt, der die Basis für die Ablagetiefensteuerung/-regelung der Saatkörner in dem Boden bildet. Es ist natürlich auch möglich, anstelle eines Ultraschallsender/-empfängersystems ein Infrarotsender/-empfängersystem oder auch mechanische Abtastkufen oder -rollen einzusetzen, um die Schwankungen bzw. die Rauhigkeit der Bodenoberfläche exakt zu erfassen.

Die Erfindung wird im folgenden anhand eines Ausführungsbeispiels weiter erläutert und beschrieben. Es zeigt

Figur 1 eine Prinzipskizze einer über eine Bodenoberfläche gezogenen Sämaschine mit einer erfindungsgemässen Vorrichtung und

Figur 2 ein Diagramm zur Erläuterung des erfindungsgemässen Verfahrens.

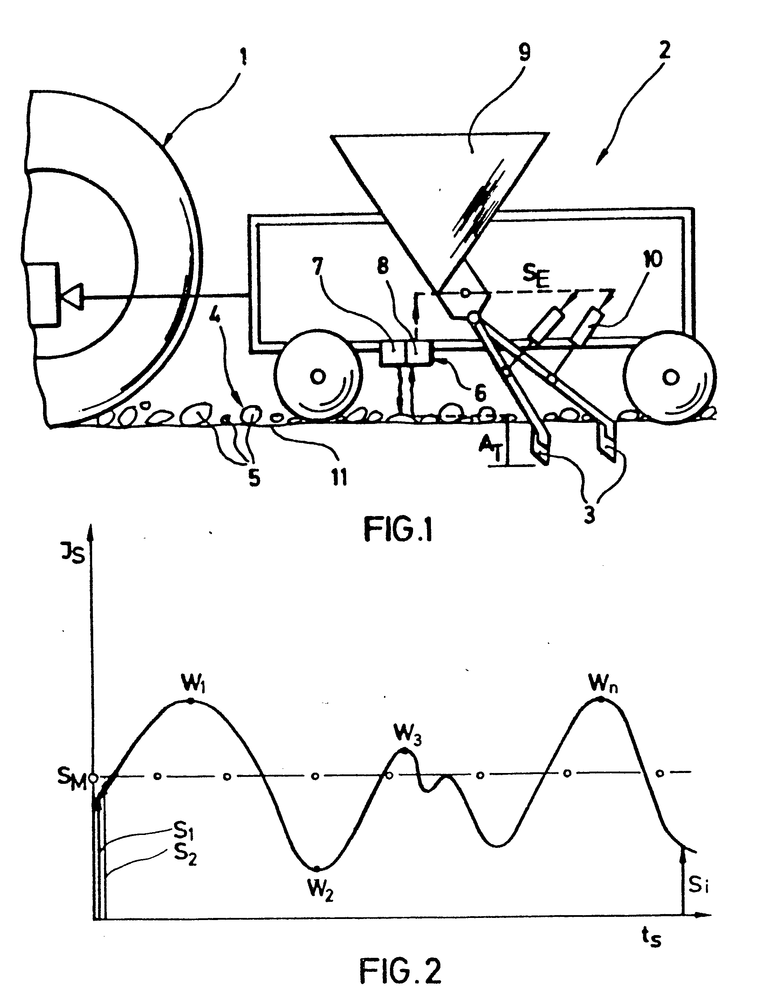

In Figur 1 ist in skizzenhafter Darstellung mit 1 ein Teil eines Schleppers bezeichnet, der eine Sämaschine 2 über eine Bodenoberfläche 4 zieht. Die Sämaschine 2 besitzt höhenverstellbare Säschare 3, über die das im Saatgutbehälter 9 aufgenommene Saatgut in den Boden eingeführt wird. Auf der festeren Bodenoberfläche 11 sind unterschiedlich grosse Kluten 5 zu erkennen, wie sie beispielsweise nach dem den Sävorgang vorbereitenden Eggen einer Ackerfläche entstehen. Erfindungsgemäss werden diese Kluten 5 bei der Bestimmung der Arbeitstiefe $A_T$ der Säschare 3 berücksichtigt.

Zu diesem Zweck ist an der Drillmaschine 2 eine Ultraschallsensoreinheit 6 angeordnet, die einen Ultraschallsender 7 und einen Ultraschallempfänger 8 aufweist. Der Ultraschallsender 7 sendet in bestimmten Zeit- oder auch in bestimmten Wegintervallen Ultraschallwellen aus, die auf die Bodenoberfläche hin gerichtet sind und von der dortigen Oberflächenstruktur reflektiert werden. Entsprechend der Rauhigkeit der Bodenoberfläche empfängt der Empfänger 8 ein mehr oder weniger intensives reflektiertes Ultraschallwellensignal, welches in noch weiter unten ausführlicher beschriebenen Art und Weise zur Bestimmung der Arbeitstiefe $A_T$ der Säscharen 3 herangezogen wird.

Die vom Empfänger 8 empfangenen Signale werden einem nicht gezeigten Mikroprozessor zugeführt, der Steuersignale $S_E$ für die Höhenverstellelemente 10 der Säschare 3 ausgibt. Mit Höhenverstellelementen sind hier alle bekannten Möglichkeiten angesprochen, die Säschartiefe zu verändern, insbesondere auch die bekannten Federn zur Veränderung bzw. Einstellung des Schardruckes.

In Figur 2 ist in einem Diagramm die Intensität $I_S$ gegenüber der Zeit t bzw. gegenüber einem Weg s aufgetragen. In diesem Weg- bzw. Zeitintervall empfängt der Empfänger 8, wie dargestellt, die Signale $s_1$, $s_2$ bis $s_i$ und gibt sie an den Mikroprozessor ab. Die Auswertung kann nun so erfolgen, dass im Mikroprozessor die Signale $s_1$ bis $s_i$ alle aufsummiert werden und dann ein Mittelwert $S_M$ gebildet wird, den man auch erhalten würde, wenn der mit den Kluten 5 bedeckte Boden vollständig eingeebnet wäre. Ausgehend von diesem als Strichpunktlinie in Figur 2 dargestellten Mittelwert kann nun die Arbeitstiefe der Schare 3 gesteuert bzw. geregelt werden, so dass somit die Kluten berücksichtigt sind.

Im Mikroprozessor kann eine Schaltung verwendet werden, die in der Lage ist, die Wendepunkte $W_1$, $W_2$ bis $W_n$ der Signalstärke $I_s$ zu speichern und von dem gebildeten charakteristischen Wert $S_M$ abzuziehen. Auf diese Weise wird ein Mass dafür erhalten, wie stark die Extremwerte um den charakteristischen Wert $S_M$ streuen. Dies ist gleichzeitig ein Mass für die Rauhigkeit der Bodenoberfläche. Wenn dabei eine grosse Rauhigkeit festgestellt wird, wird die Arbeitstiefe so gross gewählt, dass das Saatgut noch ausreichend weit von den Tälern in der Bodenstruktur entfernt in den Boden eingebracht wird. In diesem Falle ist die bezüglich des charakteristischen Wertes $S_M$ gemessene Arbeitstiefe relativ gross. Wenn die Schwankungen um diesen Wert $S_M$ dagegen kleiner sind, wird die Arbeitstiefe von diesem charakteristischen Wert $S_M$ ausgesehen kleiner, weil dann schon mit einer geringeren Arbeitstiefe eine ausreichend tiefe Ablage des Saatgutes im Boden garantiert ist.

**Patentansprüche**

1. Verfahren zur, Bestimmung der Arbeitstiefe von Sächaren (3) von Drillmaschinen (2), bei dem eine Abtasteinrichtung (6) die Bodenoberfläche (4) abtastet und entsprechende Signale ($S_1$, $S_2$,...$S_i$) erzeugt, die in einer Auswerteschaltung ausgewertet und zur Ermittlung der Arbeitstiefe ($A_T$) herangezogen werden, dadurch gekennzeichnet, dass aus den Signalen ($S_1$, $S_2$,...$S_i$) ein die auf der Bodenoberfläche (4) liegenden Kluten (5) berücksichtigender, für das Bodenprofil charakteristischer Wert ($S_M$) ermittelt wird, der einem Wert entspricht, den man bei der Abtastung einer ideal eingeebneten Bodenoberfläche erhalten würde und dass in Abhängigkeit dieses charakteristischen Wertes die Arbeitstiefe ($A_T$) bestimmt wird.

2. Verfahren nach Anspruch 1, dadurch gekennzeichnet, dass der charakteristische Wert ($S_M$) unter Zugrundelegung der in einem bestimmten Zeitintervall ($t_s$) erfassten Signale der Abtasteinrichtung (6) ermittelt wird.

3. Verfahren nach Anspruch 1, dadurch gekennzeichnet, dass der charakteristische Wert ($S_M$) unter Zugrundelegung der in einem bestimmten Wegintervall erfassten Signal der Abtasteinrichtung (6) ermittelt wird.

4. Verfahren nach Anspruch 2 oder 3, dadurch gekennzeichnet, dass der charakteristische Wert ($S_M$) durch Aufsummierung und anschliessender Mittelwertbildung der in den Intervallen erfassten Signale ermittelt wird.

5. Verfahren nach mindestens einem der vorangegangenen Ansprüche, dadurch gekennzeichnet, dass die Abtasteinrichtung (6) die Grösse der Kluten (5) als Mass für die Rauhigkeit des Bodens erfasst.

6. Verfahren nach mindestens einem der vorangegangenen Ansprüche, dadurch gekennzeichnet, dass auf der Basis des der ideal ebenen Bodenoberfläche entsprehenden charakteristischen Wertes ($S_M$) die Ablagetiefe ($A_T$) der Saatkörner automatisch gesteuert oder geregelt wird.

7. Verfahren nach mindestens einem der vorangegangenen Ansprüche, dadurch gekennzeichnet, dass die Ablagetiefe ($A_T$) der Saatkörner bei einem stark schwankenden Wert der Klutengrösse bzw. grosser Rauhigkeit grösser als die Ablagetiefe der Saatkörner bei einem schwach schwankenden Wert der Klutengrösse bzw. kleiner Rauhigkeit ausgehend von dem charakteristische Wert ($S_M$) gewählt wird.

8. Vorrichtung zur Durchführung des Verfahrens nach den Ansprüchen 1 bis 7, mit einer Abtasteinrichtung (6) für das Bodenprofil, die dem Bodenprofil entsprechende Signale erzeugt und mit einer Auswerteschaltung, die unter Verwendung der Signale ($S_1$, $S_2$,...$S_i$) der Abtasteinrichtung ein zur Bestimmung der Arbeitstiefe ($A_T$) der Sächare (3) einer Drillmaschine (2) geeignetes Ausgangssignal erzeugt, dadurch gekennzeichnet, dass die Abtasteinrichtung (6) aus einem Ultraschallsender (7) und einem Ultraschallempfänger (8) besteht und dass als Auswerteschaltung ein Mikroprozessor vorgesehen ist, wobei die vom Sender (7) ausgesandten Ultraschallwellen in Richtung der Bodenoberfläche gerichtet sind und wobei die vom Empfänger (8) aufgenommenen, von der Bodenoberfläche reflektierten Ultraschallwellen in elektrische Signale umgewandelt und im Mikroprozessor ausgewertet werden.

**Claims**

1. Method for controlling the working depth of sowing coulters (3) of seed drills (2), wherein a probing device (6) probes the ground surface (4) and generates appropriate signals ($S_1$, $S_2$,...$S_i$) which are evaluated in an evaluation circuit and are used for ascertaining the working depth ($A_T$), characterised in that a value ($S_M$) is ascertained from the signals ($S_1$, $S_2$...$S_i$), which takes account of the clods (5) lying on the ground surface (4) and is characteristic of the ground profile, such value corresponding to a value which would be obtained when be obtained when probing an ideally smoothened ground surface, and in that the working depth ($A_T$) is determined in dependence upon this characteristic value.

2. Method according to claim 1, characterised in that the characteristic value ($S_M$) is ascertained on the basis of the signals which are obtained from the probing device (6) in a predetermined time interval ($t_s$).

3. Method according to claim 1, characterised in that the characteristic value ($S_M$) is ascertained on the basis of the signals which are obtained from the probing device (6) in a predetermined path interval.

4. Method according to claim 2 or 3, characterised in that the characteristic value ($S_M$) is ascertained by adding together and subsequently averaging the signals obtained in the intervals.

5. Method according to at least one of the preceding claims, characterised in that the probing device (6) detects the size of the clods (5) as an indication of the roughness of the ground.

6. Method according to at least one of the preceding claims, characterised in that the seed deposit depth ($A_T$) is automatically controlled or regulated on the basis of the characteristic value ($S_M$) which corresponds to the ideally smooth ground surface.

7. Method according to at least one of the preceding claims, characterised in that, on the basis of the characteristic value ($S_M$), the seed deposit depth ($A_T$) is selected to be greater it the clod size value varies considerably or there is extreme roughness, than the seed deposit depth if the clod size value varies slightly or there is slight roughness.

8. Apparatus for carrying out the method according to claims 1 to 7, having a probing device (6) for probing the ground profile, which device generates signals corresponding to the ground profile, and having an evaluation circuit which, using the signals ($S_1$, $S_2$, ...$S_i$) from the probing device, generates an output signal which is suitable for determining the working depth ($A_T$) of the sowing coulters (3) of a seed drill (2), characterised in that the probing device (6) comprises an ultrasonic transmitter (7) and an ultrasonic receiver (8), and in that a microprocessor is provided as an evaluation circuit, wherein the ultrasonic waves emitted by the transmitter (7) are directed towards the ground surface, and wherein the ultrasonic waves, which are picked-up by the receiver (8) and reflected from the ground surface, are converted into electrical signals and evaluated in the microprocessor.

**Revendications**

1. Procédé pour déterminer la profondeur de travail se socs (3) d'un semoir (2), procédé selon lequel un dispositif de détection (6) détecte la surface (4) du sol et génère des signaux ($S_1$, $S_2$...$S_i$) correspondants fournis à un circuit d'exploitation et servant à faire la moyenne de la profondeur de travail ($A_T$), procédé caractérisé en ce qu'à partir des signaux ($S_1$, $S_2$...$S_i$), on détermine la valeur caractéristique ($S_M$) du profil du sol en tenant compte des mottes (5) se trouvant sur le sol (4), cette valeur caractéristique correspondant à une valeur que l'on obtiendrait à la détection d'une surface de sol aplanie de manière idéale et on règle la profondeur de travail ($A_T$) en fonction de cette valeur caractéristique.

2. Procédé selon la revendication 1, caractérisé en ce que la valeur caractéristique ($S_M$) s'obtient à partir des signaux du dispositif de détection (6) détectés au cours d'un intervalle de temps déterminé ($t_s$).

3. Procédé selon la revendication 1, caractérisé en ce que la valeur caractéristique ($S_M$) est obtenue en utilisant les signaux fournis par le dispositif de détection (6) au cours d'une trajectoire déterminée.

4. Procédé selon la revendication 2 ou 3, caractérisé en ce que la valeur caractéristique ($S_M$) s'obtient en additionnant, puis en formant la moyenne des signaux détectés au cours de l'intervalle.

5. Procédé selon au moins l'une des revendications précédentes, caractérisé en ce que le dispositif de détection (6) détecte la dimension des mottes (5) comme mesure de la rugosité du sol.

6. Procédé selon au moins l'une des revendications précédentes, caractérisé en ce que sur la base de la valeur caractéristique ($S_M$) correspondant à la surface d'un sol aplanie de manière idéale, on règle ou on commande automatiquement la profondeur d'ensemencement ($A_T$).

7. Procédé selon au moins l'une des revendications précédentes, caractérisé en ce que la profondeur d'ensemencement ($A_T$) pour des valeurs fortement variables de la dimension des mottes ou une plus grande rugosité est supérieure à la profondeur d'ensemencement pour une valeur faiblement variable des mottes ou une faible rugosité en partant de la valeur caractéristique ($S_M$).

8. Dispositif pour la mise en œuvre du procédé selon les revendications 1 à 7 à l'aide d'un dispositif de détection (6) pour le profil du sol qui génère des signaux correspondant au profil de sol ainsi qu'un circuit d'exploitation recevant les signaux ($S_1$, $S_2$...$S_i$) du dispositif de détection pour déterminer la profondeur de travail ($A_T$) des socs (3) d'un semoir (2) en générant un signal de sortie approprié, dispositif caractérisé en ce que le dispositif de détection (6) se compose d'un émetteur d'ultrasons (7) et d'un récepteur d'ultrasons (8) avec un circuit d'exploitation comprenant un microprocesseur, les ondes d'ultrasons émises par l'émetteur (7) étant dirigées vers la surface du sol et les ondes d'ultrasons reçues par le récepteur (8) après réflexion à la surface du sol étant transformées en des signaux électriques pour être traitées dans les microprocesseurs.

EP 0177024 B1

FIG.1

FIG.2